# EUROPEAN PATENT SPECIFICATION

(11) **EP 0 434 206 B1**
(45) Date of publication and mention of the grant of the patent: **05.01.1994**
(21) Application number: 90312428.7
(22) Date of filing: 14.11.1990
(51) Int. Cl.: B60C 15/024, B60C 15/06

(54) **Tyre and wheel rim assembly**
Reifen- und Felgen-Einheit
Ensemble pneumatique/jante

(30) Priority: 17.11.1989 JP 300637/89
(43) Date of publication of application: 26.06.1991
(73) Proprietor: SUMITOMO RUBBER INDUSTRIES LIMITED, Kobe-shi Hyogo-ken (JP)
(72) Inventor: Nakatani, Akihiro, Kakogawa-shi, Hyogo-ken (JP); Nagayasu, Hideaki, Toyota-shi, Aichi-ken (JP)
(74) Representative: Stewart, Charles Geoffrey

(56) References cited:
- EP-A- 0 167 283
- EP-A- 0 314 445
- BE-A- 640 777
- US-A- 4 483 382

## Description

The present invention relates to an assembly of a tubeless tyre for heavy duty use and a wheel rim.

In conventional assemblies of a tyre and a wheel rim, the bead portions of the tyre are held upon the bead seats of the rim by means of air pressure in the tyre and friction between the bead seats and the bead bottom faces. Accordingly, the bead portion is apt to move in the tyre axial direction, if a lateral force acts on the tyre when it is running deflated. If the bead portion moves axially inwardly, it eventually falls into the tyre mounting well and the tyre is displaced from the rim.

Countermeasures proposed to prevent such tyre displacement include: a wheel rim provided with a protrusion located axially inside the bead seat to prevent axially inward movement of the bead portion; a tyre and wheel rim assembly in which the wheel rim is provided with a protrusion in the middle of the bead seat, the protrusion extending into a circumferential groove formed in the bead bottom of the tyre (Japanese Patent Publication JP-A-49/13802); and a tyre and wheel rim assembly in which the tyre is provided with a toe protruding radially inwardly into a circumferential groove formed axially inside the bead seat of the rim (PCT International Publication WO87/06889).

The assembly disclosed in PCT International Publication WO87/06889 is most effective in prevention of tyre displacement, but inferior in respect of ease of mounting and demounting the tyre on the wheel rim.

If the amount of protrusion of the toe and the groove depth are decreased, then mounting and demounting become easy, but the engagement therebetween is also reduced, which results in easy displacement of the tyre from the wheel rim in use on a vehicle.

It is therefore an object of the present invention to provide a tyre and wheel rim assembly in which the mounting of the tyre on the rim is made easier whilst remaining the superior resistance to displacement.

According to of the present invention a tyre and wheel rim assembly comprises a wheel rim and a tyre mounted thereon, the tyre having a pair of axially spaced bead portions, the wheel rim having a pair of axially spaced bead seats upon which the bead portions of the tyre are seated, at least one of the bead seats being provided at the axially inner edge thereof with a circumferential groove, at least one of the bead portions being provided with a bead toe extending radially inwardly into said circumferential groove a hard rubber layer disposed radially outwardly of said bead toe, and a fabric chafer disposed along the contour of the bead portion, said hard rubber layer being made of relatively hard rubber having a hardness (HS1) of 60 to 95 JIS A, wherein the bead toe comprises a soft rubber layer disposed along the bottom face of the bead portion to form said bead toe, said soft rubber layer is covered by said fabric chafer, said soft rubber layer being made of soft rubber having a hardness (HS2) of 48 to 90 JIS A and the ration HS2/HS1 of the hardness HS2 of the soft rubber layer to the hardness HS1 of the hard rubber layer is not less than 0.7 and not more than 0.95.

According to another aspect of the present invention a tyre having a pair of axially spaced bead portions, at least one of which is provided with a bead toe at its axial and radial inner edge and extending radially and axially inwardly, comprising a hard rubber layer disposed radially outwardly of said bead toe, and a fabric chafer disposed along the contour of the bead portion, said hard rubber layer being made of relatively hard rubber having a JIS A hardness (HS1) of not less than 60 and not more than 95, wherein the bead toe comprises a soft rubber layer disposed along the bottom face of the bead portion to form said bead toe, said soft rubber layer is covered by said fabric chafer, said soft rubber layer is made of soft rubber having a JIS A hardness HS2 of not less than 48 and not more than 90 and the ratio HS2/HS1 of the hardness HS2 of the soft rubber layer to the hardness HS1 of the hard rubber layer is not less than 0.7 and not more than 0.95.

Preferably the hard rubber layer has a hardness in the range of 70 to 90 JIS A. The soft rubber layer may have a hardness in the range of 48 to 85 JIS A.

More preferably the ratio (HS2/HS1) is in the range of 0.75 to 0.85 and in one specific embodiment is 0.8.

Preferably the bottom face is tapered to suit wheel rim tapers of 5 or more degrees including the steeper angles used with light truck and truck.

The bead toe may project radially inwards of an imaginary line extending the bead bottom face and a groove may be provided between the toe and the bead bottom face. The thickness of the soft rubber layer measured radially of the tyre above the highest part of the groove may be 2 to 5mm.

The resultant construction provides a tyre which when fitted to its wheel rim has a high degree of bead retention when the tyre is deflated and subjected to side force but also has improved fitting and stripping properties due to the soft material.

An embodiment of the present invention will now be described in details in conjunction with the drawings, in which:
Figure 1 is a schematic sectional view showing an embodiment of the present invention;
Figure 2 is a sectional view showing a tyre bead portion and a wheel rim bead seat;
Figure 3 is a graph showing the relationship between hardness ratio HS2/HS1 and tyre retaining force; and
Figure 4 is a graph showing the relationship between hardness ratio HS2/HS1 and the ease or facility in mounting the tyre on the rim.

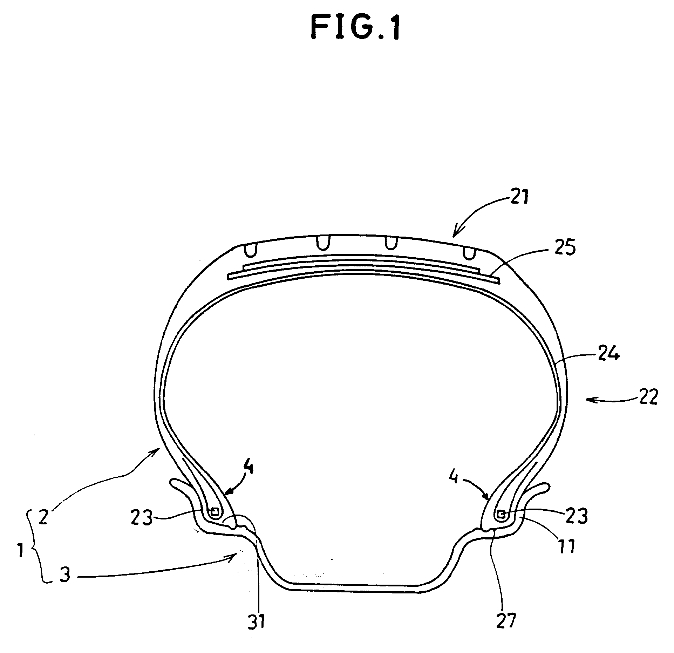

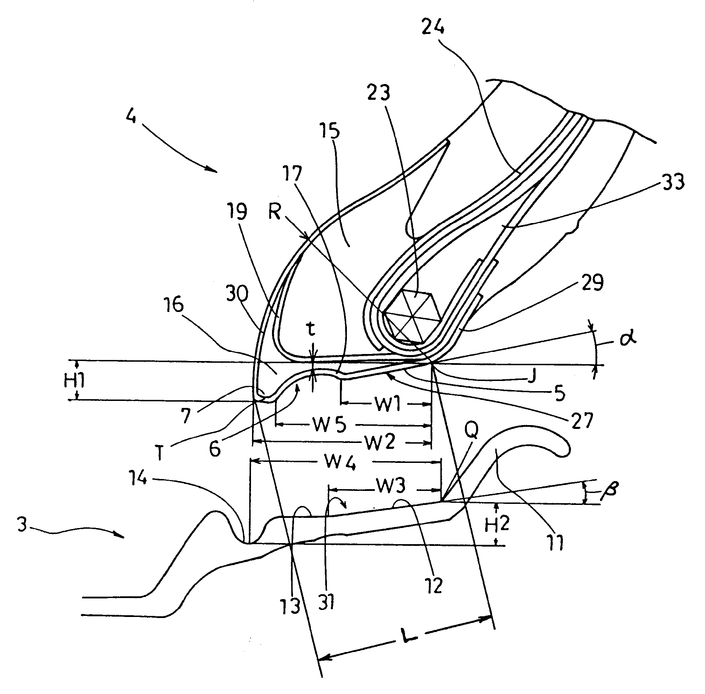

In Figures 1 and 2, a tyre and wheel rim assembly 1 comprises a wheel rim 3 and a tyre 2. The wheel rim 3 has a pair of axially spaced bead seats 31, a tyre mounting well located between the bead seats, and a pair of flanges 11.

The tyre 2 has a pair of bead portions 4, a tread portion 21 and a pair of sidewall portions 22 extending between the tread edges and the bead portions. The tyre is mounted on the wheel rim by seating the tyre bead portions upon the rim bead seats.

The tyre 2 comprises a pair of bead cores 23 disposed one in each bead portion; a carcass 24 having at least one ply of radially arranged cords extending between the bead portions 4 and turned up around the bead cores 23 from the axially inside to the outside thereof to form turned up portions, and a belt 25 disposed radially outside the carcass 24 in the tread portion.

For the carcass cords, organic fibre cord such as aliphatic polyamide, rayon, polyester, aromatic polyamide and the like, carbon fibre cords, glass fibre cords, metal fibre cords, and the like can be used.

The belt 25 is composed of plural plies of high elastic modulus cords such as aromatic polyamide fibre cords, carbon fibre cords, glass fibre cords, metal fibre cords and the like.

The belt cords are laid at relatively small angles with respect to the tyre circumferential direction for example 10 to 30 degrees.

As shown in Figure 2, each bead portion 4 is provided with a toe 7.

The surface of the bead portion comprises the following: a bottom face 27 extending between its axially outermost heel end J and innermost toe tip T; outside face 29 extending radially outwardly and axially outwardly from the heel end J, and an inside face 30 extending radially outwardly from the toe tip T.

The bead portion is further provided with a circumferential groove 6 immediately axially outside the toe 7, whereby the bottom face 27 comprises the grooved part 6, a main bead base part 5 extending between the axially outer edge of the grooved part and the heel end, and a projecting toe part 7 extending between the axially inner edge of the grooved part and the toe tip T.

The bead base part 5 is tapered axially inwardly from the axially outermost heel end J to its innermost edge so that the diameter of this part decreases from the axially outside to the inside. The inclination angle α of the bead base part 5 is in the range of 10 to 25 degrees with respect to the axial direction of the tyre. In this embodiment, therefore, the above-mentioned grooved part 6 is defined as a part located radially outside an imaginary line extended from the bead base part at the same inclination. Also, the toe part 7 is defined as a part located radially inside the above-mentioned imaginary line.

The wheel rim 3 has a pair of flanges 11 as mentioned above. Each flange 11 extends radially outwardly and axially outwardly from the axially outer edge Q of each bead seat 31. The bead seat 31 comprises a main bead seat part 12 tapered axially inwardly at an inclination angle β of 10 to 20 degrees with respect to the tyre axial direction, and a parallel part 13 extending axially inwardly from the axially inner edge of the bead seat part 12 in substantially parallel with the tyre axial direction.

Furthermore, at the axially inner edge of this parallel part 13 is formed a circumferential groove 14 extending circumferentially around the wheel rim. Thus a circumferentially extending hump is formed immediately axially inside the groove 14. In this embodiment, the diameter of the hump measured at the top is greater than that of the parallel part 13 and smaller than the rim diameter at the edge Q.

The side of the rim bead seat 31 and the size of the tyre bead bottom face 27 when the tyre is not mounted are as follows.

The ratio W2/W4 of the axial width W2 of the bead bottom face 27 measured from the heel end J to the toe tip T to the axial width W4 of the bead seat 31 measured from the axially outer edge Q to the centre of the bottom of the circumferential groove 14 is not more than 1.0 and not less than 0.7.

Furthermore, the ratio W1/W3 of the axial width W1 of the main bead base part 5 to the axial width W3 of the main bead seat part 12 is not more than 1.0 and not less than 0.5.

Furthermore, the ratio H1/H2 of the radial distance H1 between the heel end J and the radially innermost end of the bead toe 7 to the radial distance H2 between the outer edge Q and the bottom of the circumferential groove 14 is not less than 0.7 and not more than 1.2.

By setting the ratios in this way, the bead base part 5, the grooved part 6 and the toe part 7 fit on the bead seat part 12, the parallel part 13 and the groove 14, respectively.

Further, the axial width W2 of the bead bottom face 27 is 0.94 to 0.95 times the distance L measured between the heel end J and the toe tip T, and the axial distance W5 measured from the heel end J to the axially inner edge of the groove 6 is 0.85 to 0.65 times the distance L.

In the bead portion 4 of the tyre, as shown in Figure 2, a bead apex 33 made of hard rubber extending taperingly radially outwardly from the radially outside of the bead core 23 is disposed between the carcass main portion and the carcass turned up portion, and a soft rubber layer 16 is disposed along the above-mentioned bead bottom face 27 and the inside face 30 to form the bead toe 7, and a hard rubber layer 15 is disposed radially outside the soft rubber layer 16.

Furthermore, in the bead portion a chafer 17 made of an organic fabric is disposed along the contour or outer surface of the bead portion, and a reinforcing layer 19 made of an organic fabric is disposed between the soft rubber layer 16 and the hard rubber layer 15.

The chafer 17 extends from the outside face 29 to the inside face 30 along the bottom face 27, that is the above-mentioned bead base part 5, the grooved part 6 and the toe part 7, so that the soft rubber layer 16 is completely covered by the chafer.

The reinforcing layer 19 extends completely from the outside to the inside of the bead portion to prevent direction contact between the soft rubber layer and the hard rubber layer, which improves the adhesion between the soft and hard rubber layers, and also facilitates the tyre making process.

The reinforcing layer 19 is formed in a U-shaped sectional shape having an axially directed main portion and two radially outwardly directed axially inner and outer edge portion. The main portion extends substantially parallel or at a smaller inclination angle than the angle α with respect to the axial direction of the tyre from the axial outside of the bead portion to a position above the axial inner edge of the grooved part 6; the outer edge portion is extended along the outside of the carcass turned up portion and laid between the carcass turned up portion and the chafer (17). The inner edge portion is extended radially outwardly from the above-mentioned position above the grooved part 6 and terminated at a position where this portion contacts the axially inner portion of the chafer (17). However, this axially inner portion of the chafer is further extended so as to cover about half of the axially inner face of the hard rubber layer 15.

On the other hand, the above-mentioned bead core 23 is located near the bead heel J, and between the axially outside and radially inside of the bead core and the rim flange 11 and the bead seat there are the chafer 17, the reinforcing layer 19 and the carcass plies, but the rubber layers 15 and 16 do not extend into this region.

Thus the axially outer portion of the reinforcing layer 19 contacts directly with the carcass, and also the axially outer portion of the chafer 17 contacts directly with the reinforcing layer.

Therefore, the soft rubber layer 16 and the major part of the hard rubber layer 15 are located axially inside the bead core. With the exception of the grooved part 6, the thickness in the tyre radial direction of the soft rubber layer 16 is gradually increased from the axial outside to the inside, and the minimum thickness t above the grooved part 6 is in the range of 2 to 5mm. The hard rubber layer 15 has a thickness such that the distance R, which is measured in the direction at an angle of 45 degrees to the tyre axial direction from the heel end J to the axially inside face of the hard rubber layer, is in the range of 1.07 to 0.70 times the above-mentioned distance L between the heel end J and the toe tip T.

The radially outwardly located hard rubber layer 15 is made of relatively hard rubber having a JIS A hardness HS1 of not less than 60 and not more than 95, more preferably not less than 70 and not more than 90.

On the other hand, the radially inwardly located soft rubber layer 15 is made of soft rubber having a JIS A hardness HS2 of not less than 48 and not more than 90, more preferably not less than 48 and not more than 85, whereby mounting the tyre on the rim is made easier and at the same time the bead portion 4 is able to withstand the tensile stress caused in the axially inside part of the bead portion when the tire is deformed.

Furthermore, the ratio HS2/HS1 of the hardness HS2 of the soft rubber layer 16 to the hardness HS1 of the hard rubber layer 15 is not less than 0.7 and not more than 0.95.

If the ratio HS2/HS1 is less than 0.7, the hardness of the radially inner soft rubber layer is very low in comparison with that of the radially outer hard rubber layer and the radially inner rubber layer is easily deformed so that the likelihood of tyre displacement from the rim is increased.

On the other hand, if the ratio is more than 0.95, mounting the tyre on the wheel rim becomes difficult.

The above-mentioned chafer 17 is composed of one ply of rubberised woven fabric made of organic fibres such as nylon, aromatic polyamide, polyester and the like. Preferably, a 840d or 1260d nylon canvas, which is coated with topping rubber so that the thickness of the chafer inclusive of the topping rubber is about 1 to 2mm, is used.

However, a substantially non-woven fabric made of parallel cords, and a fabric made of metal or glass fibres or cords may be used. As the soft rubber layer 16 is wrapped in the chaffer, axial deformation of the bead portion 4 is reduced.

For the reinforcing layer 19, the same fabric as the chafer 17 is used, but a different fabric can be used.

Test tyres of size 215/50R14.5LT were prepared and tested for resistance to displacement or tyre retaining force and the ease or facility in tyre mounting.

The test tyres had an identical structure to that shown in Figures 1 and 2, but the hardness ratios HS2/HS1 were varied as shown in Table 1. The test results are also shown in Table 1.

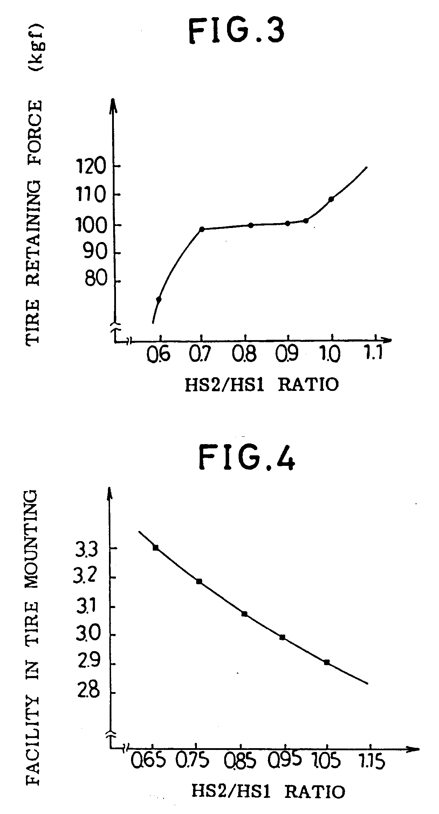

To show the relationship between the tyre retaining force and the hardness ratio HS2/HS1, they are plotted on a graph as shown in Figure 3, wherein the standard index is 100 and the larger the index, the larger is the tyre retaining force.

Figure 4 shows the relationship between the facility in tyre mounting and the hardness ratio HS2/HS1. The facility of each tyre in mounting is evaluated into five ranks, wherein a ranking of 3.0 or more is acceptable.

The test results show that both the facility in tyre mounting and the resistance to displacement can be achieved by setting the hardness ratio within the above-mentioned specific range.

As explained above, according to the present invention, tyre mounting becomes easier than the prior art assembly, and thus the working efficiency can be improved.

Whilst the invention has been described for a light truck tyre it may be applied to other vehicle tyres such as cars, motorcycles, or even trucks. The the bead seat range quoted as 10-25 degrees can be broader (car taper angles are 5 degrees).

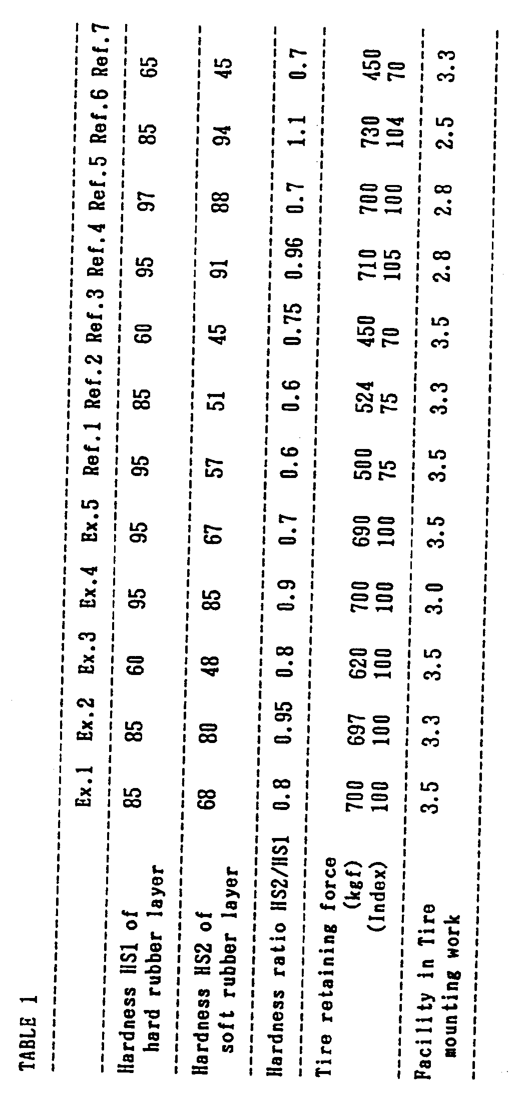

## Claims

1. A tyre and wheel rim assembly comprising a wheel rim (3) and a tyre (2) mounted thereon, the tyre having a pair of axially spaced bead portions (4), the wheel rim having a pair of axially spaced bead seats (31) upon which the bead portions (4) of the tyre are seated, at least one of the bead seats (31) being provided at the axially inner edge thereof with a circumferential groove (14), at least one of the bead portions (4) being provided with a bead toe (7) extending radially inwardly into said circumferential groove (14) a hard rubber layer (15) disposed radially outwardly of said bead toe (7), and a fabric chafer disposed along the contour of the bead portion (4), said hard rubber layer (15) being made of relatively hard rubber having a hardness (HS1) of 60 to 95 JIS A, characterised in that the bead toe (7) comprises a soft rubber layer (16) disposed along the bottom face of the bead portion to form said bead toe (7), said soft rubber layer (16) is covered by said fabric chafer (17), said soft rubber layer (16) is made of soft rubber having a hardness (HS2) of 48 to 90 JIS A and the ratio HS2/HS1 of the hardness HS2 of the soft rubber layer (16) to the hardness HS1 of the hard rubber layer (15) is not less than 0.7 and not more than 0.95.

2. A tyre having a pair of axially spaced bead portions (4), at least one of which is provided with a bead toe (7) at its axial and radial inner edge and extending radially and axially inwardly, comprising a hard rubber layer (15) disposed radially outwardly of said bead toe (7), and a fabric chafer disposed along the contour of the bead portion (4), said hard rubber layer (15) being made of relatively hard rubber having a JIS A hardness (HS1) of not less than 60 and not more than 95, characterised in that the bead toe (7) comprises a soft rubber layer (16) disposed along the bottom face (27) of the bead portion to form said bead toe, said soft rubber layer (16) is covered by said fabric chafer (17) said soft rubber layer (16) is made of soft rubber having a JIS A hardness HS2 of not less than 48 and not more than 90 and the ratio HS2/HS1 of the hardness HS2 of the soft rubber layer (16) to the hardness HS1 of the hard rubber layer (15) is not less than 0.7 and not more than 0.95.

3. A tyre according to claim 2 characterised in that the hard rubber layer (15) has a hardness (HS1) of 70 to 90 JIS A.

4. A tyre according to claims 2 or 3 characterised in that the soft rubber layer (16) has a hardness (HS2) of 48 to 85 JIS A.

5. A tyre according to any of claims 2 to 4 characterised in that the ratio (HS2/HS1) is in the range of 0.75 to 0.85.

6. A tyre according to any of claims 2 to 4 characterised in that the ratio (HS2/HS1) is 0.8.

7. A tyre according to any of claims 2 to 6 characterised in that the bead bottom face (27) comprises a main bead base part (5) disposed at an angle α to the axial direction of the tyre.

8. A tyre according to claim 7 characterised in that the bead toe (7) projects radially inwards of an imaginary line extended from the bead bottom face (27) at the same inclination angle α.

9. A tyre according to claim 7 or 8 characterised in that immediately axially outside the bead toe (7) and between the bead toe (7) and the bead base part (5) is disposed a circumferentially extending groove (6) which projects radially outwards of the imaginary line extended from the bead bottom face (27) at the inclination angle α.

10. A tyre according to claim 8 characterised in that the thickness (t) of the soft rubber layer (16) measured radially of the tyre above the highest part of the groove part (6) is 2 to 5mm.

11. A tyre according to any of claims 2 to 10 characterised in that the fabric chafer (17) comprises organic material such as aromatic polyamide, polyester or inorganic material such as metal or glass.

12. A tyre according to claim 11 characterised in that the chafer (17) is woven.

13. A tyre according to any of claims 2 to 12 characterised in that between the hard rubber layer (15) and the soft rubber layer (16) there is a fabric reinforcing layer (19).

14. A tyre according to claim 13 characterised in that the fabric reinforcing layer (19) comprises organic fibres such as aromatic polyamide and polyester.

15. A tyre according to any of claims 2 to 14 characterised in that the hard rubber layer (15) and the soft rubber layer (16) both extend axially outwards not farther than a point (11) on the tyre bead centre surface radially inwards of the bead core centre.

## Patentansprüche

1. Reifen/Radfelgen-Anordnung, welche umfaßt eine Radfelge (3) und einen darauf aufgezogenen Reifen (2), wobei der Reifen zwei axial beabstandete Wulstabschnitte (4) besitzt, die Radfelge zwei axial beabstandete Wulstsitze (31) besitzt, auf welche die Wulstabschnitte (4) des Reifens aufgesetzt sind, wobei mindestens ein Wulstsitz(31) an seiner axial inneren Kante mit einer Umfangsnut (14) versehen ist, mindestens einer der Wulstabschnitte (4) mit einer Wulstzehe (7) versehen ist, die sich radial nach innen in die Umfangsnut (14) erstreckt, eine Hartgummischicht (15), die radial außerhalb der Wulstzehe (7) angeordnet ist und ein Reifen-Einlagestoff längs der Kontur des Wulstabschnitts (4) angeordnet ist, wobei die Hartgummischicht (15) aus einem relativ harten Gummi mit einer Härte (HS1) von 60 bis 95 JIS A versehen ist, dadurch gekennzeichnet, daß die Wulstzehe (7) eine Weichgummischicht (16) umfaßt, die längs der Unterfläche des Wulstabschnitts angeordnet ist, um die Wulstzehe (7) zu bilden, die Weichgummischicht (16) durch den Reifen-Einlagestoff (17) bedeckt ist, die Weichgummischicht (16) aus einem Weichgummi mit einer Härte (HS2) von 48 bis 90 JIS A hergestellt ist und das Verhältnis HS2/HS1 der Härte HS2 der Weichgummischicht (16) zu der Härte HS1 der Hartgummischicht (15) nicht kleiner als 0,7 und nicht größer als 0,95 ist.

2. Reifen mit einem Paar axial mit Abstand versehener Wulstabschnitte (4), von denen mindestens einer mit einer Wulstzehe (7) an seiner axial und radial inneren Kante versehen ist, die sich radial und axial nach innen erstreckt, welche umfaßt eine Hartgummischicht (15), die radial außerhalb der Wulstzehe (7) angeordnet ist und einen Reifen-Einlagestoff, die längs der Kontur des Wulstabschnitts (4) angeordnet ist, wobei die Hartgummischicht (15) aus relativ hartem Gummi mit einer Härte (HS1) nach JIS A von nicht weniger als 60 und nicht mehr als 95 hergestellt ist, dadurch gekennzeichnet, daß die Wulstzehe (7) umfaßt eine längs der Unterfläche (27) des Wulstabschnitts angeordnete Weichgummischicht (16) zur Bildung der Wulstzehe und die Weichgummischicht (16) durch den Reifen-Einlagestoff (17) bedeckt ist, die Weichgummischicht (16) aus Weichgummi mit einer Härte HS2 nach JIS A von nicht weniger als 48 und nicht mehr als 90 hergestellt ist und das Verhältnis HS2/HS1 der Härte HS2 der Weichgummischicht (16) zu der Härte HS1 der Hartgummischicht (15) nicht kleiner als 0,7 und nicht größer als 0,95 ist.

3. Reifen nach Anspruch 2, dadurch gekennzeichnet, daß die Hartgummischicht (15) eine Härte (HS1) von 70 bis 90 JIS A besitzt.

4. Reifen nach Ansprüchen 2 oder 3, dadurch gekennzeichnet, daß die Weichgummischicht (16) eine Härte (HS2) von 48 bis 85 JIS A besitzt.

5. Reifen nach einem der Ansprüche 2 bis 4, dadurch gekennzeichnet, daß das Verhältnis (HS2/HS1) im Bereich von 0,75 bis 0,85 liegt.

6. Reifen nach einem der Ansprüche 2 bis 4, dadurch gekennzeichnet, daß das Verhältnis (HS2/HS1) 0,8 beträgt.

7. Reifen nach einem der Ansprüche 2 bis 6, dadurch gekennzeichnet, daß die Wulstunterfläche (27) einen Haupt-Wulstgrundteil (5) umfaßt, der mit einem Winkel α zur Axialrichtung des Reifens angeordnet ist.

8. Reifen nach Anspruch 7, dadurch gekennzeichnet, daß die Wulstzehe (7) radial nach innen von einer imaginären Linie absteht, die von der Wulstunterfläche (27) mit dem gleichen Neigungswinkel α verlängert ist.

9. Reifen nach Anspruch 7 oder 8, dadurch gekennzeichnet, daß unmittelbar axial außerhalb der Wulstzehe (7) und zwischen der Wulstzehe (7) und dem Wulstgrundteil (5) eine sich in Umfangsrichtung erstreckende Nut (6) angeordnet ist, die radial nach außen von der imaginären Linie vorsteht, die von der Wulstunterfläche (27) mit dem Neigungswinkel α verlängert ist.

10. Reifen nach Anspruch 8, dadurch gekennzeichnet, daß die Dicke (t) der Weichgummischicht (16), gemessen radial zum Reifen über dem höchsten Teil des Nutteils (6), 2 bis 5 mm beträgt.

11. Reifen nach einem der Ansprüche 2 bis 10. dadurch gekennzeichnet, daß (17) organisches Material umfaßt wie aromatische Polyamide, Polyester, oder anorganisches Material wie Metall oder Glas.

12. Reifen nach Anspruch 11, dadurch gekennzeichnet, daß der Reifen-Einlagestoff (17) gewebt ist.

13. Reifen nach einem der Ansprüche 2 bis 12, dadurch gekennzeichnet, daß zwischen die Hartgummischicht (15) und die Weichgummischicht (16) eine Gewebe-Verstärkungslage (19) eingesetzt ist.

14. Reifen nach Anspruch 13, dadurch gekennzeichnet, daß die Gewebe-Verstärkungslage (19) organische Fasern wie aromatische Polyamide und Polyester umfaßt.

15. Reifen nach einem der Ansprüche 2 bis 14, dadurch gekennzeichnet, daß die Hartgummischicht (15) und die Weichgummischicht (16) beide in Axialrichtung nicht weiter abstehen als bis zu einer Stelle (11) an der Reifenwulstzentrumsfläche radial innerhalb des Wulstkernzentrums.

## Revendications

1. Ensemble à pneumatique et jante de roue, comprenant une jante (3) de roue et un pneumatique (2) monté sur elle, le pneumatique ayant deux parties (4) de talon qui sont distantes axialement, la jante de roue ayant deux sièges (31) de talon qui sont distants axialement et sur lesquels les parties de talon (4) du pneumatique viennent se loger, l'un au moins des sièges de talon (31) ayant, au bord axialement interne, une gorge circonférentielle (14), l'une au moins des parties de talon (4) ayant une pointe (7) de talon disposée radialement vers l'intérieur dans la gorge circonférentielle (14), une couche (15) de caoutchouc dur disposée radialement à l'extérieur de la pointe (7) de talon, et un organe d'étoffe de frottement disposé le long du profil de la partie de talon (4), la couche (15) de caoutchouc dur étant formée d'un caoutchouc relativement dur ayant une dureté (HS1) comprise entre 60 et 95 suivant la norme JIS A, caractérisé en ce que la pointe (7) de talon comporte une couche (16) de caoutchouc tendre disposée le long de la face inférieure de la partie de talon afin qu'elle forme la pointe (7) de talon, la couche (16) de caoutchouc tendre étant recouverte de l'organe d'étoffe de frottement (17), la couche (16) de caoutchouc tendre étant formée d'un caoutchouc tendre ayant une dureté (HS2) comprise entre 48 et 90 suivant la norme JIS A, et le rapport HS2/HS1 de la dureté HS2 de la couche (16) de caoutchouc tendre à la dureté HS1 de la couche (15) de caoutchouc dur n'est pas inférieur à 0,7 ni supérieur à 0,95.

2. Pneumatique ayant deux parties (4) de talon qui sont distantes axialement, l'une d'elles au moins ayant une pointe (7) de talon à son bord axial et radial interne et dépassant radialement et axialement vers l'intérieur, comprenant une couche (15) de caoutchouc dur disposée radialement à l'extérieur de la pointe (7) de talon, et un organe d'étoffe de frottement disposé le long du profil de la partie de talon (4), la couche (15) de caoutchouc dur étant formée d'un caoutchouc relativement dur ayant une dureté (HS1) suivant la norme JIS A qui n'est pas inférieure à 60 ni supérieure à 95, caractérisé en ce que la pointe (7) de talon comporte une couche (16) de caoutchouc tendre disposée le long de la face inférieure (27) de la partie de talon pour la formation de la pointe de talon, la couche (16) de caoutchouc tendre étant recouverte de l'organe d'étoffe de frottement (17), la couche (16) de caoutchouc tendre est formée d'un caoutchouc tendre ayant une dureté HS2, selon la norme JIS A, qui n'est pas inférieure à 48 ni supérieure à 90, et le rapport HS2/HS1 de la dureté HS2 de la couche (16) de caoutchouc tendre à la dureté HS1 de la couche (15) de caoutchouc dur n'est pas inférieur à 0,7 ni supérieur à 0,95.

3. Pneumatique selon la revendication 2, caractérisé en ce que la couche (15) de caoutchouc dur a une dureté (HS1) comprise entre 70 et 90 suivant la norme JIS A.

4. Pneumatique selon la revendication 2 ou 3, caractérisé en ce que la couche (16) de caoutchouc tendre a une dureté (HS2) comprise entre 48 et 85 suivant la norme JIS A.

5. Pneumatique selon l'une des revendications 2 à 4, caractérisé en ce que le rapport HS2/HS1 est compris entre 0,75 et 0,85.

6. Pneumatique selon l'une des revendications 2 à 4, caractérisé en ce que le rapport HS2/HS1 est égal à 0,8.

7. Pneumatique selon l'une des revendications 2 à 6, caractérisé en ce que la face inférieure (27) du talon comporte une partie principale de base de talon (5) faisant un angle α avec la direction axiale du pneumatique.

8. Pneumatique selon la revendication 7, caractérisé en ce que la pointe (7) de talon dépasse radialement vers l'intérieur d'une droite imaginaire prolongeant la face inférieure (27) de talon avec le même angle d'inclinaison α.

9. Pneumatique selon la revendication 7 ou 8, caractérisé en ce qu'une gorge circonférentielle (6) est disposée juste à l'extérieur de la pointe (7) de talon axialement et entre la pointe (7) de talon et la partie de base de talon (5), cette gorge étant disposée radialement à l'extérieur de la droite imaginaire prolongeant la face inférieure de talon (27) suivant l'angle d'inclinaison α.

10. Pneumatique selon la revendication 8, caractérisé en ce que l'épaisseur (t) de la couche (16) de caoutchouc tendre mesurée radialement par rapport au pneumatique au-dessus de la partie la plus haute de la partie de gorge (6) est comprise entre 2 et 5 mm.

11. Pneumatique selon l'une des revendications 2 à 10, caractérisé en ce que l'organe d'étoffe de frottement (17) est une matière organique, telle qu'un polyamide aromatique, un polyester ou une matière minérale telle qu'un métal ou du verre.

12. Pneumatique selon la revendication 11, caractérisé en ce que l'organe de frottement (17) est tissé.

13. Pneumatique selon l'une des revendications 2 à 12, caractérisé en ce qu'une couche d'étoffe d'armature (19) est placée entre la couche (15) de caoutchouc dur et la couche (16) de caoutchouc tendre.

14. Pneumatique selon la revendication 13, caractérisé en ce que la couche d'étoffe d'armature (19) contient des fibres organiques, telles qu'un polyamide aromatique et un polyester.

15. Pneumatique selon l'une des revendications 2 à 14, caractérisé en ce que la couche (15) de caoutchouc dur et la couche (16) de caoutchouc tendre sont toutes deux disposées axialement vers l'extérieur de manière qu'elles ne dépassent pas un point (11) de la surface du centre du talon du pneumatique qui se trouve radialement à l'intérieur du centre de la tringle.
